# EUROPÄISCHE PATENTANMELDUNG

(11) **EP 4 455 607 A2**
(43) Veröffentlichungstag der Anmeldung: **30.10.2024**
(21) Anmeldenummer: 24164699.1
(22) Anmeldetag: 20.03.2024
(51) Int. Cl.: G01C 11/02, G01C 15/00, G01B 11/25, G06T 17/00, H04N 13/254

(54) **VORRICHTUNG UND VERFAHREN ZUR FOTOGRAMMETRISCHEN ERSTELLUNG EINES 3D-MODELLS EINES OBJEKTS MITTELS STRUKTURIERTEM LICHT**

(30) Priorität: 05.04.2023 DE 102023108676
(71) Anmelder: rooom AG, 07749 Jena (DE)
(72) Erfinder: Elstner, Hans, 07743 Jena (DE); Lober, Hendrik, 07743 Jena (DE); Bicker, Michael, 07743 Jena (DE)
(74) Vertreter: Meissner Bolte Partnerschaft mbB

(57) **Zusammenfassung**

Die Erfindung betrifft eine Scan-Straße zur fotogrammetrischen Erstellung eines 3D-Modells eines Objektes, aus einem oder mehreren Einzelbildern des Objektes, umfassend eine Vielzahl an Kameras, welche in einer vorgegebenen Relativposition zueinander positioniert sind; eine Vielzahl von Beleuchtungselementen, welche in einer vorgegebenen Relativposition zueinander positioniert sind und dazu ausgebildet sind, strukturiertes Licht zu emittieren; eine Vielzahl von Ausstrahlungselementen, welche dazu ausgestaltet sind das Objekt gleichmäßig diffus auszuleuchten; einen Objektträger, welcher das zu scannende Objekt in einer einstellbaren Position hält und eine Steuereinheit, welche das Auslösen der Vielzahl an Kameras steuert, vorzugsweise in Abstimmung mit der Einstellung und/oder dem Auslösen der Vielzahl von Beleuchtungselementen.

## Beschreibung

Die vorliegende Erfindung betrifft eine Vorrichtung und ein Verfahren zur fotogrammetrischen Erstellung eines 3D-Modells eines Objekts mittels strukturiertem Licht, gemäß dem Gegenstand von Anspruch 1 und 9.

Als Fotogrammmetrie bezeichnet man Verfahren, bei denen aus Fotografien bzw. Bildern von Objekten dreidimensionale (3D)-Modelle der Objekte erstellt werden können. Bei der (digitalen) Fotogrammmetrie werden geometrische Informationen des zu erfassenden Objekts aus zweidimensionalen Fotografien extrahiert. Durch die Auswertung von Fotografien aus verschiedenen Blickwinkeln ist es möglich, ein 3D-Modell des zu erfassenden Objekts zu erzeugen. Das 3D-Modell stellt dabei ein digitales Modell des erfassten Objekts dar, das Objektkoordinaten und Informationen über die Oberfläche des Objekts wie Texturen und/oder Farben enthält.

Fotogrammmetrie findet eine Vielzahl von Anwendungen. Insbesondere im Zuge zunehmender Digitalisierung ist es oftmals wünschenswert, digitale 3D-Modelle von realen Objekten anzufertigen. Dies erlaubt es, sich einen genauen räumlichen Eindruck des betreffenden Objektes zu verschaffen, ohne dabei das Objekt selbst transportieren zu müssen.

Dies ist besonders bei schwer transportablen Güter, welche entweder durch ihr Gewicht oder die Zerbrechlichkeit, von z.B. Kulturgütern, nicht leicht bewegt werden können. Zudem ist auch die berührungslose Digitalisierung von entscheidender Bedeutung, gerade bei empfindlichen Objekten, da diese sowohl exakt ist als auch das Objekt selbst nicht verändert.

Es besteht daher weiterhin der Bedarf, bekannte Ansätze zur fotogrammetrischen Erfassung dahingehend weiterzuentwickeln, dass die Erstellung eines 3D-Modells auch von Objekten mit komplexer Geometrie einfach und zeitsparend erfolgen kann. Dabei sollen die aktuell bestehenden Schwächen der Fotogrammetrie durch neue Verfahren ausgeglichen werden. Hierbei stellen insbesondere die Umgebungslichtabhängigkeit, Auflösung, Rekonstruktion verdeckter Bereiche und die Materialerkennung, bisher große Probleme dar.

Des Weiteren eignen sich verschiedene Arten der Bilderfassung unterschiedlich gut für bestimmte Zwecke der Fotogrammmetrie, welche teilweise im Widerspruch zueinanderstehen. So ist beispielsweise die Aufnahme von Bildern bei normaler Beleuchtung gut geeignet zur Erfassung von Farbdaten, offenbart aber Schwächen bei der Rekonstruktion von Strukturdaten auf spiegelnden und/oder einfarbigen Flächen, welche sich wiederum gut aus anderen Bildformen ableiten lassen. Es besteht somit ein Bedürfnis danach, die Vorzüge unterschiedlicher Bilderfassungsmethoden miteinander zu kombinieren, was mit den bisher bekannten Lösungen einen großen Aufwand bedeutet.

Der vorliegenden Erfindung liegt somit die Aufgabe zugrunde, die Erstellung von digitalen 3D-Modellen mittels Fotogrammmetrie weiter zu verbessern und zu vereinfachen, und dabei auch die Genauigkeit des erhaltenen 3D-Modells zu verbessern.

Die Aufgabe wird durch eine Scanstraße mit den Merkmalen von Anspruch 1 und ein Verfahren mit den Merkmalen von Anspruch 9 gelöst. Vorteilhafte Weiterbildungen ergeben sich aus den Unteransprüchen.

Die Aufgabe wird insbesondere gelöst durch eine Scan-Straße zur fotogrammetrischen Erstellung eines 3D-Modells eines Objektes, aus einem oder mehreren Einzelbildern des Objektes, umfassend eine Vielzahl an Kameras, welche in einer vorgegebenen Relativposition zueinander positioniert sind, sowie eine Vielzahl von Beleuchtungselementen, welche in einer vorgegebenen Relativposition zueinander positioniert sind und dazu ausgebildet sind, strukturiertes Licht zu emittieren. Weiterhin umfasst die Scan-Straße eine Vielzahl von Ausstrahlungselementen, welche dazu ausgestaltet sind, das Objekt gleichmäßig diffus auszuleuchten, einen Objektträger, welcher das zu scannende Objekt in einer einstellbaren Position hält und eine Steuereinheit, welche das Auslösen der Vielzahl an Kameras steuert, vorzugsweise in Abstimmung mit der Einstellung und/oder dem Auslösen der Vielzahl von Beleuchtungselementen.

Die Aufgabe wird weiter gelöst durch eine Scanstraße gemäß Anspruch 1, sowie durch ein Verfahren gemäß Anspruch 9.

Ein wesentlicher Gedanke der Erfindung besteht darin, dass eine Vielzahl an unterschiedlichen Beleuchtungs- und Aufnahmemethoden miteinander kombiniert werden kann, und dadurch die Qualität des 3D Modells erhöht werden kann. Die Anbringung der dazu notwendigen Aufnahme- und Beleuchtungselemente in einer fixierten vorgegebenen Anordnung ermöglicht dabei nicht nur eine Minimierung des Kalibrierungsaufwandes zwischen verschiedenen Objekten, was einen höheren Durchsatz erlaubt, sondern erlaubt auch eine präzisere und vollständigere Ausstrahlung des Objekts mit den unterschiedlichen Licht-Typen, als herkömmliche Methoden, was eine höhere Genauigkeit und Formtreue ermöglicht. Der feste Aufbau der Erfindung, leistet hierzu einen weiteren Beitrag, da die Relativpositionen sich zwischen einzelnen Aufnahmen nicht ändern.

Unter strukturiertem Licht ist dabei elektromagnetische Strahlung zu verstehen, welche eine bestimmte räumliche Struktur aufweist, was bedeutet, dass sie im bestrahlten Bereich nicht homogen und/oder isotrop bezüglich ihrer Frequenz und/oder Amplitude ist. Dabei ist die Struktur der Strahlung, im Vorhinein bekannt, was bedeutet, dass die Information, welche über die Struktur der Strahlung vorliegt, während des Fotogrammmetrieverfahrens berücksichtigt werden kann, vorzugsweise um eine bessere Auflösung der Oberflächenstruktur des Objektes zu ermöglichen.

Durch einen Abgleich der bekannten Struktur des Lichtes mit den Merkmalen des Objektes lässt sich somit eine wesentlich bessere Darstellung der Oberflächenstruktur des Objekts erstellen. Gleichzeitig eignet sich Strukturiertes Licht aufgrund seiner Helligkeits- und/oder Farbvariationen nicht sehr gut für eine Farberkennung von Oberflächen.

Beispiele für strukturiertes Licht sind Streifenlicht, RGB Noise, Voronoy Noise, Simplex Noise, Perlin Noise, und Multifrequenz-Rauschen. Vorzugsweise wird dabei der Noise oft mit sich selbst in unterschiedlicher Frequenz überlagert.

Die Ausstrahlungselemente dienen im Gegenzug der möglichst homogenen und isotropen Ausleuchtung des Objektes, und weisen daher eine möglichst geringe Variation der Strahlungsintensität und Strahlungsfrequenz(en) über den ausgeleuchteten Bereich auf.

Dies ist insbesondere deshalb von Vorteil, weil sich damit eine eindeutige Farberkennung von Oberflächen erzielen lässt. Gleichzeitig ist eine gute Auflösung von Oberflächenstrukturen und Rauigkeit nur schwer durch eine solche Ausleuchtung erzielbar.

Unter einem Objektträger ist jede Befestigungs- oder Trägervorrichtung zu verstehen, welche das Objekt in einer vorbestimmten Position relativ zu den Kameras und Beleuchtungs- und Ausstrahlungselementen positioniert.

Durch eine solche Positionierung, lässt sich sicherstellen, dass eine befriedigende Abdeckung des Objekts durch die Kameras und die Beleuchtungs- und Ausstrahlungselemente gewährleistet ist. Dies hat insbesondere den Vorteil, dass auch mehrere Objekte nacheinander gescannt werden können, ohne dabei den Kamera- und Lichtaufbau maßgeblich zwischen den Objekten verändern zu müssen.

Im Folgenden werden unter dem Begriff Ausstrahlungselemente, alle Quellen elektromagnetischer Strahlung verstanden, mit denen das Objekt angestrahlt wird. Insbesondere fallen darunter sowohl die Beleuchtungselemente als auch die Ausstrahlungslemente.

Die Steuereinheit ermöglicht zudem die Koordination der einzelnen Elemente so, dass Bestrahlung mit verschiedenen Lichtsorten und Aufnahme der entsprechenden Bilder aufeinander abgestimmt sind.

Die erfindungsgemäße Scanstraße ermöglicht so, durch ein synergistisches Zusammenwirken der verschiedenen Bestrahlungsarten, die Vorzüge jeder Einzelnen für das fotogrammetrische Erkennen von Objekten nutzbar zu machen.

Gemäß einer bevorzugten Ausführungsform der Erfindung umfasst die Vielzahl an Kameras der Scanstraße Multispektralkameras und/oder Wärmebildkameras.

Eine Multispektralkamera ordnet dabei jedem Pixel ein zweidimensionales Spektrum zu, welches dazu verwendet werden kann, eine genauere Rekonstruktion des Objekts zu ermöglichen. Insbesondere lässt sich aus dem zweidimensionalen Spektrum an jedem Pixel der Reflexionsteil von detektiertem Licht "herausgefiltert" werden. Des Weiteren ist es möglich, aufgrund der gesamten spektralen Information, den tatsächlichen Farbanteil der zugrundeliegenden Oberfläche besser zu identifizieren, und verfälschende Effekte auszugleichen und/oder zu erkennen. Zudem lässt sich mittels einer multispektralen Aufnahme die Oberflächenrauheit des Objektes besser erkennen.

Der Einsatz von Wärmebildkameras ermöglicht weiterhin nicht sichtbare Spektrumsanteile zu erkennen, welche insbesondere bei der Rekonstruktion der Oberflächeneigenschaften, wie Rauheit oder Metalness, von Vorteil ist.

Wärmebilder sind ebenfalls von besonderem Vorteil für Materialien die im sichtbaren spektrum opaque oder transparent sind. Zum Beispiel kann in einem Wärmebild eine Hand unter einer opaquen Plastiktüte erkannt werden, Glas hingegen wird als opaque angezeigt. Dies führt dazu, dass genauer manipuliert werden kann, welche Flächen rekonstruiert werden sollen.

In einer weiteren bevorzugten Ausführungsform der Erfindung sind die Beleuchtungselemente ausgebildet, strukturiertes Licht zu emittieren, vorzugsweise in Form eines vorbestimmten Rauschmusters, weiter vorzugsweise in Form von RGB-Noise.

Durch ein Einstellen des Rauschens in entweder der Frequenz oder der Intensität des strukturieren Lichtes ermöglicht eine bessere Abstimmung auf die konkreten Anforderungen, welche das Objekt an die Ermittlung der Oberflächenstruktur stellt. So ist beispielsweise gerade RGB Noise aufgrund der großen Farbvariation besonders gut für die Erfassung von einfarbigen Oberflächen geeignet.

Die Struktur des strukturierten Lichtes muss dabei aber nicht notwendiger Weise durch Rauschen gegeben sein. So sind beispielsweise auch Linien oder Schachbrettmuster denkbar, welche aufgrund der bekannten Abstände zwischen Linien eine genauere Abmessung erlauben.

Des Weiteren ermöglicht die Verwendung von strukturiertem Licht eine genauere Rekonstruktion von weißen oder einfarbigen Oberflächen, da der Farbverlauf des Rauschmusters auf den weißen oder einfarbigen Oberflächen besser erkennbar ist, und somit mehr Merkmale erkennbar macht.

In einer ebenfalls bevorzugten Ausführungsform sind die Kameras derart positioniert sind, dass sich die jeweiligen Bildbereiche überlappen, vorzugsweise um bis zu 30% überlappen, wobei die Kameras und/oder die Beleuchtungselemente weiter vorzugsweise in einem Tetraederaufbau oder Ikosaederaufbau positioniert sind.

Die Überlappung von Bildbereichen einzelner Kameras ist dabei von Vorteil, da es zum einen eine ausreichende Abdeckung des zu scannenden Objekts aus allen Richtungen sicherstellt, und zum anderen eine Kamerakalibrierung, auf welche im Folgenden noch eingegangen wird, vereinfacht.

Die Positionierung der Kameras und/oder Beleuchtungselemente in einem Tetraederaufbau oder Ikosaederaufbau ermöglicht weiterhin eine gleichmäßige Abdeckung des gescannten Objektes sowohl in den Aufnahmen, als auch in der Bestrahlung. Die angegebenen Anordnungen sind dabei besonders nützlich, da Sie eine gute Abdeckung mit einer möglichst geringen Zahl an Kameras ermöglichen.

Unter einer einem Tetraeder- bzw. Ikosaederaufbau wird hier verstanden, dass die Positionen der Kameras und/oder Beleuchtungselemente sich an den Ecken eines Tetraeders bzw. Ikosaeders befinden, welcher das zu scannende Objekt in seinem Mittelpunkt hat. Dabei sind natürlich auch solche Aufbauten zu verstehen in denen nicht notwendigerweise alle Ecken der entsprechenden Figur auch tatsächlich der Position einer Kamera oder eines Beleuchtungselementes sind. So sind zum Beispiel auch halbe oder viertelte Tetraeder- bzw. Ikosaeder darunter zu verstehen.

In einer weiteren bevorzugten Ausführungsform ist der Objektträger dazu ausgestaltet, die eingestellte Position des Objektes zu verändern, vorzugsweise durch eine Drehung, weiter vorzugsweise durch eine Verschiebung, weiter vorzugsweise durch eine Verkippung.

Um eine möglichst vollständige Abdeckung des Objektes von allen Seiten zu erreichen, kann es von Vorteil sein das Objekt selbst in seiner Position relativ zu den Kameras und/oder Ausstrahlungselementen zu verändern. Dadurch können beispielsweise nur schwer zugängliche Seiten des Objekts (wie beispielsweise die Unterseite) besser abgebildet werden. Auch kann auf diese Weise die Anzahl der insgesamt benötigten Kameras und Ausstrahlungselemente reduziert werden, wodurch sich eine zum Teil erhebliche Komplexitäts- und/oder Kostenersparnis erreichen lässt.

In einer ebenfalls bevorzugten Ausführungsform ist der Objektträger zumindest teilweise aus einem transparenten Material hergestellt, vorzugsweise aus Glas, weiter vorzugsweise aus transparentem Kunststoff.

Eine transparente Ausgestaltung des Objektträgers bietet ebenfalls den Vorteil, dass dadurch eine möglichst ganzflächige Abdeckung des Objektes sowohl in der Bestrahlung als auch in der Bildaufnahme ermöglicht wird. Zudem lassen sich transparente Objektträger bei der späteren fotogrammmetrischen Bearbeitung leichter vom eigentlich zu erfassenden Objekt trennen.

Es ist hierbei bevorzugt, dass an den Kameras und/oder dem Objekt ein Polfilter angebracht ist, um am Objektträger reflektiertes oder gebrochenes Licht herauszufiltern.

Da durch die Reflexion an der transparenten Oberfläche des Objektträgers das reflektierte Licht zumindest teilweise polarisiert wird, lässt sich durch ein Herausfiltern polarisierter Strahlungsbestandteile ebenfalls eine bessere Trennung von Objektträger und Objekt erreichen. Insbesondere ist es möglich, die Beleuchtungselemente (vorzugsweise zu den Kameras) einer Kreuzpolarisation zu unterziehen. Dies wird bevorzugt durch die Anbringung eines Polfilters vor einer Strahlungsquelle und eines relativ zu diesem gedrehten Polfilters vor der Kamera, insbesondere vor der Linse erreicht, wodurch eine gleichmäßigere Beleuchtung erreicht werden kann. Dazu können zu Reflektionen herausgefiltert werden.

In einer weiteren bevorzugten Ausführungsform umfasst die Scanstraße eine Vielzahl an Blitzlichtelementen, welche dazu ausgestaltet sind, Blitzlicht zu erzeugen.

Blitzlicht eignet sich besonders gut um gewisse physikalische Oberflächeneigenschaften wie Metalness oder Rauheit zu erkennen. Durch eine Bestrahlung mit Blitzlicht lassen sich somit wertvolle Informationen für die Rekonstruktion der physikalischen Eigenschaften einer Oberfläche im Fotogrammmetrie verfahren sammeln.

Die Blitzlichtelemente können dabei sowohl separate Leuchten als auch die bereits in den Kameras enthaltenen Blitzlichtelemente sein.

Unter der Metalness wird dabei ein Parameter verstanden, welcher ein Maß für die Leitfähigkeit der gescannten Oberflächen angibt. Da dielektrische Materialien andere Reflektionseigenschaften haben als Leiter, ist eine Erfassung dieser Reflektionseigenschaften enorm hilfreich, um eine realistische Oberfläche des 3D-Modells zu rendern. Dabei ist eine Bestrahlung des Objektes mit hoher Intensität, wie sie bei Blitzlicht gegeben ist, von großer Bedeutung.

Da die Metalness bzw. Metalizität physikalisch direkt mit der Dielektrizität zusammenhängt, sind diese Begriffe im Rahmen der vorliegenden Offenbarung als austauschbar zu verstehen. Für die Rauheit wird auf dem betreffenden technischen Gebiet auch häufig der Begriff Roughness verwendet.

Die fotogrammetrische Erstellung eines 3D-Modells des Objekts aus den einzelnen Bildern erfolgt dabei erfindungsgemäß vorzugsweise unter Verwendung einer Scan-Straße, und umfasst einen ersten Schritt umfassend: das Bestrahlen des Objekts mit strukturiertem Licht, das Aufnehmen einer Vielzahl an ersten Bildern des strukturiert beleuchteten Objektes aus einer Vielzahl von Richtungen, das Durchführen einer Kamerakalibrierung und das Erstellen eines Strukturmeshes für ein 3D-Modell des Objekts mittels eines Fotogrammmetrieverfahrens.

Unter einer Kamerakalibrierung wird dabei verstanden, dass anhand der aufgenommenen Vielzahl an ersten Bildern die genaue Bestimmung der relativen Position einzelner Kameras zueinander bestimmt wird. Dies kann insbesondere durch Bilderkennung vorgenommen werden, in dem in den Einzelbildern Punkte identifiziert und in anderen Einzelbildern gesucht werden, wodurch sich eine relative Position der beiden Kameras zueinander ermitteln lässt.

Durch die Kalibrierung ist es möglich, Rechenaufwand einzusparen, da Aufnahmen, welche in den verschiedenen Verfahrensschritten gemacht wurden, bereits einer eindeutigen Perspektive zugeordnet werden können. So ist es beispielsweise möglich, die Daten, welche aus der Vielzahl an ersten Bildern, welche mit strukturiertem Licht aufgenommen wurden, und anhand derer ein Strukturmesh erstellt wurde direkt mit Daten aus einem weiteren Verfahrensschritt zu kombinieren, da für jeden Pixel in der Vielzahl an ersten Bildern bekannt ist mit welchem Pixel in der Vielzahl an weiteren Bildern er korrespondiert.

So können beispielsweise die Oberflächenfarben einfach auf das Strukturmesh "überlagert" werden, und ein weiterer Schritt, der Zuordnung einzelner Positionen auf dem Strukturmesh, entfällt.

Ein zweiter Schritt umfasst dabei das Aufnehmen einer Vielzahl an zweiten Bildern des Objektes mit normaler Beleuchtung, aus einer Vielzahl von Richtungen und das Rekonstruieren einer Oberflächenfarbe des Objekts auf dem Strukturmesh anhand der Vielzahl an zweiten Bildern zur Erstellung eines 3D-Modells mittels des Fotogrammmetrieverfahrens.

Durch das erfindungsgemäße Verfahren werden die vorteilhaften Eigenschaften der verschiedenen Bestrahlungsarten miteinander kombiniert, und so eine bessere Qualität des 3D-Modells erreicht. Durch einen Abgleich der bekannten Struktur des Lichtes mit den Merkmalen des Objektes lässt sich ein genaueres Strukturmesh des realen Objektes herstellen, als dies mit gewöhnlicher Beleuchtung der Fall wäre. Eine Idee der vorliegenden Erfindung ist es daher, zunächst ein farbloses Strukturmesh des Objektes mittels Fotogrammmetrie herzustellen, basierend auf den ersten Bildern, welche mit strukturiertem Licht aufgenommen wurden.

Da sich strukturiertes Licht weniger gut dazu eignet Farben zu erkennen, wird in einem zweiten Schritt die Farbinformation der Oberflächen des Objektes aus einer Vielzahl von zweiten Bildern unter normaler Beleuchtung gewonnen. Dadurch lässt sich eine genaue Farbrekonstruktion des Objektes erreichen, welche dann mit dem bereits vorhandenen Strukturmesh kombiniert werden kann, um ein 3D-Modell zu bilden, welches sowohl strukturell als auch farblich eine hohe Genauigkeit (d.h. Ähnlichkeit mit dem Objekt) aufweist.

Wenn zwei verschiedene Scans erzeugt werden, bedeutet dies unter anderem die Generation zweier unterschiedlicher Punktwolken, welche die entsprechenden Informationen für jeden Punkt beinhalten. Dabei gibt es immer Unterschiede in der entstehenden Geometrie. Einerseits ist die Zuordnung der Oberfläche dieser Meshes sehr rechenaufwändig, andererseits treten aber durch die Unterschiede Spezialfälle in der Zuordnung auf, die gelöst werden müssen. Dadurch kann nicht einfach ein gewisser Radius bzw. gewisse Punkte aus einem Scan auf einen anderen übertragen werden. Es besteht das Problem, dass lokal interpoliert werden muss aber nicht bekannt ist, ob ein Scan an einer Stelle nicht Fehler beinhaltet, verformt ist oder große Teile des entsprechenden Bereiches fehlen. Man ist also für jeden Punkt gezwungen, sehr große Bereiche der Scans miteinander zu vergleichen. Dies bedeutet in der Regel einen hohen Rechena ufwa nd.

Durch die erfindungsgemäße Komplexitätsreduktion das die Meshes identisch sind, wird eine Übertragung in den meisten Fällen überhaupt erst ermöglicht. Durch den Aufbau und die abgeschlossene Kalibrierung liegt hier die zweite Bildermenge im selben virtuellen Raum und dadurch fällt das Mapping und/oder die Transformation der Daten in einen Kalibrierungsraum weg.

In einer weiteren bevorzugten Ausführungsform schließt sich an die beiden Schritte ein weiterer dritter Schritt an, umfassend das Bestrahlen des Objektes mit Blitzlicht, das Aufnehmen einer Vielzahl an dritten Bildern des mit Blitzlicht beleuchteten Objekts aus einer Vielzahl von Richtungen und das Erstellen von metalness und/oder roughness parametern des 3D-Modells anhand der Vielzahl von dritten Bildern.

Wie bereits erörtert, können physikalische Eigenschaften der Oberflächen eines Objektes besser aus Bildern rekonstruiert werden, die eine sehr hohe Strahlungsintensität aufweisen. Aufgrund der hoher Intensität der reflektierten Strahlung, ist diese aber weniger gut für die Farb- und Strukturerkennung geeignet. Es ist daher von großem Vorteil, ein bereits bestehendes 3D-Modell durch Informationen zu ergänzen, welche bei sehr hohen Strahlungsintensitäten wie beispielsweise Blitzlicht gewonnen wurden. Dadurch lassen sich insbesondere die dielektrischen oder metallischen Eigenschaften der rekonstruierten Oberflächen besser wiedergeben.

Hier ist ebenfalls ausschlaggebend, dass das Blitzlicht gerichtet ist und genau aus der Kamerarichtung kommt. Im dritten Schritt ist es daher bevorzugt, dass nicht alle Kameras und Blitzlichtelemente auch nicht zeitgleich auslösen, sondern jede Kamera muss gemeinsam mit "ihrem" Blitzlichtelement bzw. Blitzlicht einzeln auslösen. Da nur auf das Licht gewartet werden muss, können die zeitlichen Abstände aber sehr gering ausfallen, wie beispielsweise bei Stroboskoplicht. Dies wird insbesondere durch die erfindungsgemäße Steuereinheit erreicht. Durch die Intensität des reflektieren Lichtes jedes Bildpunktes und der bekannten Richtung aus der es kommt, kann dann einerseits der Winkel einer Detailfläche zur Kamera ermittelt werden, andererseits kann auch im Zusammenhang mit den umliegenden Bildpunkten bestimmt werden, wie rau oder metallisch die Fläche ist.

Bei diesem Verfahren kann sogar noch eine sogenannte Normal-Map erzeugt werden. Bestehende KIs die versuchen bisher auch die Diffusfarbe der Oberfläche zu rekonstruieren, welche aber durch das Blitzlicht stark verfälscht wird, außerdem funktionieren diese Verfahren nur lokal, es kann also kein ganzes 3D-Modell rekonstruiert werden. Dieses Problem wird gemäß der Erfindung aber bereits durch vorherige Schritte gelöst. Durch das Mapping kann jedes lokale Bild korrekt auf die Modelloberfläche projiziert werden, und damit eine Textur für das gesamte Modell erzeugt werden.

Eine weitere bevorzugte Ausführungsform beinhaltet einen vierten Schritt, umfassend das Aufnehmen einer Vielzahl an Wärmebildern und/oder Multifrequenzbildern des Objektes, sowie das Rekonstruieren von Oberflächenparametern, vorzugsweise einer Oberflächenfarbe, des Objektes auf dem Strukturmesh anhand der Vielzahl an Bildern zur Erstellung eines 3D Modells mittels des Fotogrammmetrie Verfahrens.

Insbesondere lässt sich aus dem zweidimensionalen Spektrum eines Multifrequenzbildes an jedem Pixel der Reflexionsteil von detektiertem Licht herausfiltern. Des Weiteren ist es möglich, aufgrund der gesamten spektralen Information, den tatsächlichen Farbanteil der zugrundeliegenden Oberfläche besser zu identifizieren, und verfälschende Effekte auszugleichen und/oder zu erkennen. Zudem lässt sich mittels einer multispektralen Aufnahme die Oberflächenrauheit des Objektes besser erkennen. Dadurch eignen sich Bilder, welche mithilfe einer Wärmebildkamera und/oder Multifrequenzkamera aufgenommen wurden besonders gut, um die Oberflächenstruktur bzw. das Strukturmesh des Objektes zu erstellen.

Der Einsatz von Wärmebildkameras ermöglicht weiterhin nicht sichtbare Spektrumsanteile zu erkennen, welche insbesondere bei der Rekonstruktion der Oberflächeneigenschaften, wie Rauheit oder Metalness, von Vorteil ist.

Der kalibrierte Aufbau bildet dabei im allgemeinen die Grundlage für das Übertragen von Daten unterschiedlicher bildgebender Systeme. Durch das Kombinieren unterschiedlicher Verfahren können Werte genauer bestimmt und Schwächen verschiedener Systeme ausgeglichen werden.

Gemäß einer weiteren bevorzugten Ausführungsform, wird die Art des verwendeten strukturierten Lichts in obigen Schritten nach bestimmten Erfordernissen ausgewählt. Vorzugsweise kommen dabei verschiedene Rauschmuster zum Einsatz wie RGB-Noise, Voronoy Noise, Perlin Noise oder Simplex Noise.

Dabei eignen sich gewisse Muster für bestimmte Zwecke besser als andere. Insbesondere sind Schachbrett und oder Linienmuster besonders geeignet dazu die Abmessungen des Objektes, oder einzelner Bestandteile davon, genau zu erfassen. Andere Rauschmuster, wie beispielsweise RGB Rauschmuster eignen sich besonders um weiße oder strukturarme Oberflächen zu erfassen. Grundsätzlich eignen sich die Rauschmuster besser dazu, die Oberflächenstruktur und die Form des zu scannen Objektes abzubilden.

Es ist weiter bevorzugt, zusätzlich eine Objektklassifizierung und/oder eine Erkennung von Unterteilen und/oder Baugruppen an dem 3D-Modell durchzuführen.

Die Erkennung kann sowohl bereits während der fotogrammetrischen Rekonstruktion erfolgen, als auch anhand des fertigen 3D-Modells. Vorzugsweise können dabei die spezifischen Informationen aus den einzelnen oben beschriebenen Schritten herangezogen werden. Beispielsweise können Unterteile anhand von Strukturdaten, farblichen Unterschieden oder verschiedener Materialeigenschaften erkannt werden. So ist es beispielsweise naheliegend, dass Oberflächen, welchen die gleichen metallischen Eigenschaften im dritten Schritt zugewiesen wurden, auch zu ein und demselben Unterteil gehören.

Diese Erkennung ist insbesondere dann von Vorteil, wenn bestimmte Baugruppen eines Objektes besonders hervorgehoben oder bearbeitet werden sollen.

In einer besonders bevorzugten Ausführungsform beinhaltet das Verfahren folgende weitere Schritte: Die Erstellung eines realen Scans aus den in im ersten und/oder im zweiten Schritt gewonnenen Bilddaten; die Erzeugung eines oder mehrerer virtueller Scans aus dem realen Scan; die Erzeugung einer Vielzahl an Modellen aus der Vielzahl an virtuellen Scans, mittels einer Fotogrammmetriesoftware; das Bilden eines optimierten Modells aus der Vielzahl an Modellen; gekennzeichnet dadurch, dass das Bilden eines optimierten Modells mittels Anwendung eines Generative-Adverserial-Networks auf die Vielzahl an Modellen durchgeführt wird.

Generative Adverserial Networks (GAN) eignen sich in besonderem Maße für eine Verwendung in Fotogrammmetrieverfahren, insbesondere in Kombination mit den oben angegebenen Mitteln, da sich aufgrund der Vielzahl an unterschiedlichen gewonnenen Bildern mit einfachen Mitteln eine Vielzahl an Trainingsdaten bereitstellen lässt.

Als realer Scan wird hierbei die Vielzahl an aufgenommenen Bildern bezeichnet, welche in ihrer Gesamtheit die Grundlage für das zu erstellende 3D Modell bilden.

Als virtueller Scan wird dabei die Vielzahl von Bildern bezeichnete, anhand derer die Fotogrammmetrie Software das eigentliche 3D Modell erstellt. Dieser kann mit dem realen Scan übereinstimmen, ist jedoch in der Regel durch eine Vielzahl von virtuell bearbeiteten Bildern ergänzt, welche einen größeren Trainingsdatensatz für die Fotogrammmetrie Software bereitstellen.

Als Modell wird dabei ein dreidimensionales Drahtgittermodell, bzw. 3D-Oberfläche des Objektes verstanden, welches mittels der Fotogrammmetrie Software aus den virtuellen Scans und/oder einer Punktwolke erzeugt wurde.

Unter einer Optimierung bzw. einem optimierten Modell wird ein 3D Modell verstanden, aus welchem verschiedene Fehler wie Löcher oder Verfärbungen entfernt wurden und/oder welches bezüglich seiner Struktur/Topologie und/oder Datengröße verbessert wurde. Vorzugsweise ergibt sich dies aus einer Vielzahl von Modellen, beispielsweise durch eine Mittelung von einer Vielzahl an Modellen.

In einer weiter bevorzugten Ausführungsform wird ein virtueller Scan durch das Entfernen von einem oder mehrerer Einzelbilder des realen Scans erzeugt.

Das Weglassen einzelner Bilder ermöglicht dabei auf eine sehr einfache Art und Weise, verschiedene Trainingsdatensätze für die Fotogrammetrie Software, bzw. das GAN bereitzustellen.

Entscheidend dabei ist, dass sich durch das Weglassen auch nur eines einzigen Bildes die gesamte Kamerakalibrierung verändert. Dadurch liegen auch alle rekonstruierten 3D-Positionen an leicht unterschiedlichen Stellen. Dadurch sind die Scans bei geringen Abweichungen in den Ursprungsdaten schon für die KI unterschiedlich genug um als neuer Datensatz zu gelten. Dadurch lernt die KI den Spielraum in dem ein 3D-Punkt im Verhältnis zu seinen Nachbarn korrekt platziert ist. Das gezielte Verfälschen der Bilddaten selbst führt dazu, dass die KI lernt, die Werte der 3D-Punkte selbst zu optimieren.

In einer noch weiter bevorzugten Ausführungsform wird dabei ein virtueller Scan durch das Verfälschen von Farbdaten von einem oder mehreren Einzelbildern des realen Scans erzeugt. Vorzugsweise können auch Rauhheit und/oder Metalness und/oder Wärmebilder verfälscht werden

Das GAN wird vorzugsweise nur auf Basis von fehlerbehafteten bzw. explizit verrauschten Daten trainiert. Der statistische Mittelwert einer unendlichen Anzahl an verrauschten Daten ergibt den perfekten Scan. Dadurch ist das erfindungsgemäße Verfahren, anders als andere verfahren, nicht darauf angewiesen perfekte Daten als Referenz für das Training zu kreieren.

Auch das Verfälschen einzelner Farbdaten, wie beispielsweise das Schwärzen einzelner Bildbereiche, oder eine Anpassung der RGB Werte einzelner Pixel, ermöglicht eine Vielzahl, welche das GAN für die Erstellung eines Modells benötigt. Insbesondere ermöglicht dies eine Vielzahl von virtuellen Scans zu generieren, ohne dabei tatsächlich neue Aufnahmen des Objektes machen zu müssen.

Weiterhin ist bevorzugt einen virtuellen Scan durch das Entfernen von Teilen eines oder mehrerer Einzelbilder des realen Scans zu erzeugen.

Das Weglassen von Teilen einzelner Bilder ermöglicht dabei auf eine sehr einfache Art und Weise, verschiedene Trainingsdatensätze für die Fotogrammetrie Software, bzw. das GAN bereitzustellen. Insbesondere ist dies mit einem sehr geringen Rechenaufwand verbunden, was sowohl in Hinblick auf die Kosten, als auch auf die Dauer des gesamten Verfahrens große Vorteile bietet.

Über das Erzeugen einer großen Menge unterschiedlicher Scans über das beschriebene Variieren der Kamerakalibrierung und damit der Scanpunkte, lernt die KI sich einem statistischen Mittelwert des perfekten Scans anzunähern, ohne die Art des Rauschens vorher kennen zu müssen.

In einer weiter bevorzugten Ausführungsform umfasst das Verfahren das Anwenden eines Verschiebungsrauschmusters auf ein Modell, wodurch weitere Modelle erzeugt werden.

Unter einem Verschiebungsrauschmuster ist hierbei zu verstehen, dass auf die Punktkoordinaten des Modells (vorzugsweise einer Punktwolke) punktweise eine ortsabhängige Verschiebung angewandt wird. Dabei ist die Richtung und Größe der Verschiebung durch ein Rauschmuster bestimmt, wobei das Rauschmuster vorzugsweise eines der folgenden ist: XYZ-Rauschen, Perlin-Noise, Voronoi-Noise, weißes (Gaußsches) Rauschen. Das Verschiebungsrauschmuster kann dabei vorzugsweise eine beliebige Funktion der Ortskoordinaten sein, solange die maximale Verschiebung (also obere Schranke der Funktion) klein, vorzugsweise nicht größer als 1%, weiter vorzugsweise nicht größer als 3%, gegenüber der Bildgröße ist.

Nachfolgend wird die Erfindung auch hinsichtlich weiterer Einzelheiten, Merkmale und Vorteile beschrieben, die anhand der Figuren näher erläutert werden. Die beschriebenen Merkmale und Merkmalskombinationen, wie nachfolgend in den Figuren der Zeichnung gezeigt und anhand der Zeichnung beschrieben, sind nicht nur in der jeweils angegebenen Kombination, sondern auch in anderen Kombinationen oder in Alleinstellung anwendbar, ohne dass damit der Rahmen der Erfindung verlassen wird.

Es zeigen:
- Figur 1: eine Frontalansicht einer erfindungsgemäßen Scan-Straße;
- Figur 2: eine Draufsicht der in Figur 1 gezeigten Scan-Straße;
- Figur 3: eine geschnittene Seitenansicht der in Figur 1 gezeigten Scan-Straße;
- Figur 4: eine weitere Anordnung einer erfindungsgemäßen Scan-Straße.
- Figur 5: ein Verfahren zur Erstellung eines 3D-Modells
- Figur 6: ein weiteres Verfahren zur Erstellung eines 3D-Modells

Die Figuren sind lediglich schematischer Natur und dienen ausschließlich dem Verständnis der Erfindung. Gleichartige Elemente sind in der Beschreibung der Ausführungsbeispiele mit denselben Bezugszeichen versehen.

Figur 1 zeigt dabei ein Ausführungsbeispiel einer erfindungsgemäßen Scanstraße. Das zu scannende Objekt 1 ist dabei auf einem transparenten Objektträger 5 platziert, welcher ebenfalls über Schienen verfügt, mittels derer das Objekt 1 vor und zurückbewegt werden kann, um die Position des Objektes 1 relativ zu den Kameras 2 zu verschieben, ohne dabei die relative Position der Kameras 2 zueinander verändern zu müssen.

Es ist dabei nicht notwendig, dass der Objektträger 5 lediglich eine lineare Verschiebung des Objektes 1 ermöglicht. Ebenso denkbar sind Drehtische oder andere Abbringungen, welche das Objekt 1 verkippbar halten. In Figur 1 gezeigten Ausführungsform ist dabei der Objektträger 5 zumindest teilweise transparent gehalten, um eine Abbildung des Objektes 1 auch von unten zu ermöglichen. Grundsätzlich ermöglicht eine transparente Ausgestaltung des Objektträger 5 das Objekt 1 aus einer größeren Vielzahl an Richtungen zu fotografieren, ohne dabei dessen Position ändern zu müssen. Dies erleichtert ebenfalls die Kalibrierung, und spart Zeit und zusätzliche Arbeitsschritte.

Eine transparente Ausgestaltung des Objektträgers 5 bedeutet dabei, dass der Objektträger 5 in Teilen oder gänzlich transparent für sichtbares Licht ist. Zusätzlich ist es aber auch möglich, insbesondere dann, wenn multispektrale Kameras oder Wärmebildkameras verwendet werden, den Objektträger 5 transparent für andere Wellenlängenbereiche zu gestalten, insbesondere Infrarot, welches von Wärmebildkameras erfasst wird.

Wie in Figur 1 gezeigt, ist die Vielzahl an Kameras 2 vorzugsweise an einer Befestigungsstruktur 8 angebracht, welche sicherstellt, dass sich die relative Position der Kameras 2 zueinander nicht verändert, wodurch lediglich eine einmalige Kalibrierung der Kameras 2 notwendig ist, da sich die relative Position der Kameras 2 während des Scanvorgangs dann konstant halten lässt.

Es ist dabei bevorzugt jedoch nicht notwendig, dass die Beleuchtungselemente 3 und die Ausstrahlungselemente 4 dabei an derselben Befestigungsstruktur 8 angebracht sind. Eine Anregung an derselben Befestigungsstruktur 8 bietet dabei den Vorteil, dass sichergestellt werden kann, dass das Objekt 1 in jeder Position hinreichend ausgeleuchtet und bestrahlt wird.

Die Vielzahl an Kameras 2 kann sich dabei aus normalen Kameras, Multispektralkameras und oder Wärmebildkameras zusammensetzen, bzw. aus einer Mischung daraus. Ebenso ist denkbar, dass die verwendeten Kameras 2 sowohl eine multispektrale Funktion, bzw. Wärmebildfunktion besitzen, als auch als normale Kamera fungieren können.

In dieser und auch in den folgenden Abbildungen nicht gezeigt, können die Kameras 2 ebenfalls ein Blitzlichtelement 7 enthalten, welches zur Bestrahlung des Objektes mit einem Blitzlicht ausgebildet ist. Dies ist besonders vorteilhaft, da die meisten herkömmlichen Kameras bereits mit einem Blitzlichtelement 7 ausgestattet sind, welches dann zu diesem Zwecke verwendet werden kann. Ebenfalls ist es grundsätzlich denkbar, die Ausleuchtungselemente 4 so zu konfigurieren, dass sie alle, oder ein Teil von Ihnen, ebenfalls als Blitzlichtelement 7 fungieren können. Dadurch reduziert sich die Anzahl der verwendeten Bauteile, wodurch sich sowohl Kosten als auch Platz sparen lassen.

Wenn das Objekt 1 platziert ist, wird es mittels der Beleuchtungselemente 3 mit strukturiertem Licht beleuchtet, wobei die Vielzahl an Kameras 2 eine Vielzahl an Bildern aus einer Vielzahl unterschiedlicher Richtungen machen. Dabei sind auch die Beleuchtungselemente 3 in einer festen Relation zueinander positioniert. Im Ausführungsbeispiel gemäß Figur 1 wird dies erreicht, indem die Beleuchtungselemente 3 an der Befestigungsstruktur 8 angebracht sind.

Die Beleuchtung des Objektes 1 in einem ersten Schritt mit strukturiertem Licht durch die Beleuchtungselemente 3 kann dabei vorzugsweise mit einem vorbestimmten Rauschmuster erfolgen. Dabei kann die Anordnung der Beleuchtungselemente 3 so gewählt werden, dass diese auf das ausgewählte Rauschmuster optimal abgestimmt ist.

Für die Aufnahme einer Vielzahl an zweiten Bildern des Objektes 1 mit normaler Beleuchtung, werden die Beleuchtungselemente 3 abgeschalten, und die Vielzahl an Kameras macht weitere Bilder aus einer Vielzahl an Richtungen, wobei das Objekt 1 lediglich von den Ausstrahlungselementen 4 angestrahlt wird.

Figur 2 zeigt dabei ein Ausführungsbeispiel der vorliegenden Erfindung gemäß Figur 1 aus der Vogelperspektive, bzw. Draufsicht. Hierbei ist insbesondere der Ikosaederaufbau der Befestigungsstruktur 8 erkennbar, wobei sich an den Ecken Ikosaeders die Kameras 2 befinden. Eine derartige Geometrie ist besonders bevorzugt, da sie ermöglicht, eine gewisse Redundanz in den Bildbereichen der einzelnen Kameras zu erzeugen, wodurch sowohl die Kalibrierung der Kameras, als auch die spätere Zusammenführung der einzelnen Bilder erleichtert wird.

Das Objekt 1 wird dabei vom Objektträger 5 derart gehalten, dass es sich im Zentrum des Ikosaeders befindet.

Grundsätzlich sind auch andere Geometrien denkbar, es ist jedoch besonders bevorzugt, wenn sich die Bildbereiche der einzelnen Kameras 2 überlappen. Dabei sind die Kameras besonders bevorzugt so anzuordnen, dass der erzeugte überlappen etwa 30 % des Bildbereiches ausmacht, was sowohl eine gute Abdeckung des Objektes 1 ermöglicht, als auch die Anzahl der insgesamt zu verwendenden Kameras optimiert.

Figur 3 zeigt dabei den oben beschriebenen Ausbau noch einmal aus einer seitlichen Perspektive, wobei die vordere Hälfte des Aufbaus weggelassen wurde, um eine bessere Sicht auf das Objekt 1, den Objektträger 5 und die umgebenden Kameras 2, Beleuchtungselemente 3, und Ausstrahlungselemente 4 zu geben.

Figur 4 zeigt schematisch eine weitere bevorzugte Ausführungsform, bei welcher separate Blitzlichtelemente 7 an der Befestigungsstruktur 8 angebracht sind. Ebenfalls sind hier die Ausstrahlungselemente, nicht an der Befestigungsstruktur angebracht, sondern separat aufgestellt und auf das Objekt 1 ausgerichtet. Da die Ausstrahlungselemente 4 nicht notwendigerweise exakt in ihrer Position zueinander kalibriert werden müssen, da sie lediglich eine diffuse Ausleuchtung des Objektes 1 erreichen müssen, ist es mitunter von Vorteil, sie auf beweglichen externen Haltern anzubringen, um gegebenenfalls ihre Position einfacher verschieben zu können.

Ebenfalls schematisch gezeigt ist die Steuereinheit 6, welche die Vielzahl an Kameras 2, und/oder die Beleuchtungselemente 3, und/oder die Blitzlichtelemente 7, sowie eventuell die Ausstrahlungselemente 4 steuert. Dabei kann die Steuereinheit mit den einzelnen Elementen verkabelt sein, oder, was hinsichtlich der Handhabbarkeit des gesamten Aufbaus vorzuziehen ist, diese durch Funksignale steuern. Insbesondere kann die Steuereinheit 6 dazu verwendet werden, die verfahrensgemäßen Schritte nacheinander einzuleiten und durchzuführen.

Die Blitzlichtelemente 7 können in einem dritten Schritt dazu verwendet werden, Aufnahmen des Objektes 1 zu machen, bei denen das Objekt 1 mit Blitzlicht bestrahlt wird, während die Kameras 2 Aufnahmen davon machen. Dies ist besonders vorteilhaft, wenn es darum geht die Metalness und/oder Roughness des 3D Modells zu bestimmen.

Figur 5 zeigt ein Ausführungsbeispiel des erfindungsgemäßen Verfahrens. Aus den in den einzelnen Schritten gewonnenen Bilddaten 11, (d.h. aus der Vielzahl genommener Bilder) wird dabei ein realer Scan 12 des Objektes 1 zusammengestellt. Wie bereits oben erläutert, besteht der reale Scan aus den tatsächlichen Bilddaten 11 des Objektes 1, welche mittels der Vielzahl an Kameras aufgenommen wurden. In einer bevorzugten Ausführungsform kann nun, mittels einer Fotogrammmetrie Software 13, ein 3D Modell 14 des Objektes 1 erstellt werden, indem der reale Scan 12 direkt verarbeitet wird.

Figur 6 zeigt eine weitere bevorzugte Ausführungsform des erfindungsgemäßen Verfahrens. Dabei wird zunächst wieder ein realer Scan 12 des Objektes 1 aus den Bilddaten 11 erstellt. Die Fotogrammmetrie Software 13 erzeugt dann aus dem realen Scan 13 eine Vielzahl an virtuellen Scans 15. Dies geschieht durch eine Manipulation der zugrundeliegenden Bilddaten 11, beispielsweise durch das Entfernen von einem oder mehreren Einzelbildern, das Verfälschen von Farbdaten, oder das Entfernen von Teilen eines oder mehrerer der Einzelbilder. Aus jedem der auf diese Weise veränderten Bilddaten 11 Sätze kann somit ein virtueller Scan 15 erzeugt werden. Im Gegensatz zu dem realen Scan 12, liegen dem virtuellen Scan 15 somit Verfälschte bzw. geänderte oder unvollständige Bilddaten 11 zugrunde.

Die Fotogrammmetrie Software 13 kann dann aus jedem der Vielzahl an virtuellen Scans 15, welche von der Fotogrammmetrie Software 13 erzeugt wurden, ein 3D-Modell 14 des Objektes 1 erzeugen, was zu einer Vielzahl an 3D-Modellen 14 führt.

Jedes dieser 3D-Modelle 14 kann dann an ein sogenanntes Generative Adverserial Network, im Folgenden GAN, übergeben werden, welches die Vielzahl an 3D-Modellen 14 als Datengrundlage nutzt, um weitere zu erzeugen. Durch diesen Schritt wird die Genauigkeit bzw. die Robustheit des Wenderings eines 3D-Modells 14 erheblich erhöht. Insbesondere ist es möglich, aus der großen Vielzahl von 3D-Modellen 14 mittels des GAN ein optimiertes 3D-Modell 17 zu bestimmen, zum Beispiel durch Mittelung, welches eine erheblich bessere Qualität aufweist, als auf Grundlage lediglich roher Scans möglich wäre. Insbesondere ist es so auch möglich, auf Basis von nur sehr wenigen ursprünglichen Bilddaten 11 (wie zum Beispiel nur wenigen tatsächlichen Bildern) ein genaues Abbild des Objektes 1 in Form eines optimierten 3D-Modells zu erzeugen. Grundsätzlich können sowohl die Punktwolke aus dem Fotogrammmetrieprozess als auch die Ausgangsdaten verändert werden. Der Fotogrammmetrieprozess findet vorzugsweise jedoch nur einmal statt.

### Bezugszeichenliste

- 1: Objekt
- 2: Kameras
- 3: Beleuchtungselemente
- 4: Ausstrahlungselemente
- 5: Objektträger
- 6: Steuereinheit
- 7: Blitzlichtelemente
- 8: Befestigungsstruktur
- 11: Bilddaten
- 12: Realer Scan
- 13: Fotogrammmetriesoftware
- 14: 3D-Modell
- 15: Virtueller Scan
- 16: GAN
- 17: Optimiertes 3D-Modell

## Patentansprüche

1. Scan-Straße zur fotogrammetrischen Erstellung eines 3D-Modells eines Objektes, aus einem oder mehreren Einzelbildern des Objektes, umfassend:
• eine Vielzahl an Kameras, welche in einer vorgegebenen Relativposition zueinander positioniert sind;
• eine Vielzahl von Beleuchtungselementen, welche in einer vorgegebenen Relativposition zueinander positioniert sind und dazu ausgebildet sind, strukturiertes Licht zu emittieren;
• eine Vielzahl von Ausstrahlungselementen, welche dazu ausgestaltet sind das Objekt gleichmäßig diffus auszuleuchten,
• einen Objektträger, welcher das zu scannende Objekt in einer einstellbaren Position hält;
• eine Steuereinheit, welche das Auslösen der Vielzahl an Kameras steuert, vorzugsweise in Abstimmung mit der Einstellung und/oder dem Auslösen der Vielzahl von Beleuchtungselementen.

2. Scanstraße gemäß Anspruch 1,
wobei die Vielzahl an Kameras Multispektralkameras und/oder Wärmebildkameras umfasst.

3. Scanstraße gemäß einem der vorhergehenden Ansprüche,
wobei die Beleuchtungselemente dazu ausgebildet sind, strukturiertes Licht zu emittieren, vorzugsweise in Form eines vorbestimmten Rauschmusters, weiter vorzugsweise in Form von RGB-Noise.

4. Scanstraße gemäß einem der vorhergehenden Ansprüche,
wobei die Kameras derart positioniert sind, dass sich die jeweiligen Bildbereiche überlappen, vorzugsweise um bis zu 30% überlappen, wobei die Kameras und/oder die Beleuchtungselemente weiter vorzugsweise in einem Tetraederaufbau oder Ikosaederaufbau positioniert sind.

5. Scanstraße gemäß einem der vorhergehenden Ansprüche,
wobei der Objektträger dazu ausgestaltet ist, die eingestellte Position des Objektes zu verändern, vorzugsweise durch eine Drehung, weiter vorzugsweise durch eine Verschiebung, weiter vorzugsweise durch eine Verkippung.

6. Scanstraße gemäß einem der vorhergehenden Ansprüche, insbesondere gemäß Anspruch 5,
wobei der Objektträger zumindest teilweise aus einem transparenten Material hergestellt ist, vorzugsweise aus Glas, weiter vorzugsweise aus transparentem Kunststoff.

7. Scanstraße gemäß einem der vorhergehenden Ansprüche, insbesondere gemäß Anspruch 6,
wobei an der Vielzahl an Kameras und/oder am Objekt Polfilter angebracht sind, um am Objektträger reflektiertes oder gebrochenes licht herauszufiltern.

8. Scanstraße gemäß einem der vorhergehenden Ansprüche,
umfassend eine Vielzahl an Blitzlichtelementen, welche dazu ausgestaltet sind, Blitzlicht zu erzeugen.

9. Verfahren zur fotogrammetrischen Erstellung eines 3D-Modells eines Objektes aus Einzelbildern des Objektes, vorzugsweise unter Verwendung einer Scan-Straße gemäß einem der vorhergehenden Ansprüche, umfassend:
• einen ersten Schritt umfassend:
a) das Bestrahlen des Objekts mit strukturiertem Licht;
b) das Aufnehmen einer Vielzahl an ersten Bildern des strukturiert beleuchteten Objektes aus einer Vielzahl von Richtungen;
c) das Durchführen einer Kamerakalibrierung,
d) das Erstellen eines Strukturmeshes für ein 3D-Modell des Objekts mittels eines Fotogrammmetrieverfahrens;
• einen zweiten Schritt umfassend:
a) das Aufnehmen einer Vielzahl an zweiten Bildern des Objektes mit normaler Beleuchtung aus einer Vielzahl von Richtungen;
b) das Rekonstruieren einer Oberflächenfarbe des Objekts auf dem Strukturmesh anhand der Vielzahl an zweiten Bildern zur Erstellung eines 3D-Modells mittels des Fotogrammmetrieverfahrens.

10. Verfahren nach Anspruch 9, umfassend:
• einen dritten Schritt umfassend:
a) das Bestrahlen des Objektes mit Blitzlicht;
b) das Aufnehmen einer Vielzahl an dritten Bildern des mit Blitzlicht beleuchteten Objekts aus einer Vielzahl von Richtungen;
c) das Erstellen von metalness und/oder roughness parametern des 3D-Modells anhand der Vielzahl von dritten Bildern.

11. Verfahren nach Anspruch 9, umfassend:
• einen vierten Schritt umfassend:
a) das Aufnehmen einer Vielzahl an Wärmebilder und/oder Multifrequenzbilder des Objektes;
b) das Rekonstruieren von Oberflächenparametern, vorzugsweise einer Oberflächenfarbe, des Objekts auf dem Strukturmesh anhand der Vielzahl an zweiten Bildern zur Erstellung eines 3D-Modells mittels des Fotogrammmetrieverfahrens.

12. Verfahren nach einem der Ansprüche 9 bis 11,
wobei für die Bestrahlung des Objektes mit strukturiertem Licht eine angepasste Struktur des Lichtes verwendet wird, die vorzugsweise ausgewählt ist aus einem vorbestimmten Rauschmuster, RGB-Noise, Voronoi Noise, Perlin Noise oder Simplex Noise.

13. Verfahren nach einem der Ansprüche 9 bis 12,
wobei zusätzlich eine Objektklassifizierung und/oder eine Erkennung von Unterteilen und/oder Baugruppen an dem 3D-Modell durchgeführt wird.

14. Verfahren nach einem der Ansprüche 9 bis 13,
wobei das Fotogrammmetrieverfahren folgende Schritte beinhaltet:
• Erstellung eines realen Scans aus den in im ersten und/oder im Zweiten Schritt gewonnenen Bilddaten;
• Erzeugung eines oder mehrerer virtueller Scans aus dem realen Scan;
• Erzeugung einer Vielzahl an Modellen aus der Vielzahl an virtuellen Scans, mittels einer Fotogrammmetriesoftware;
• Bilden eines optimierten Modells aus der Vielzahl an Modellen;
**gekennzeichnet dadurch,**
**dass** das Bilden eines optimierten Modells mittels Anwendung eines Generative-Adverserial-Networks auf die Vielzahl an Modellen durchgeführt wird.

15. Verfahren nach Anspruch 14,
wobei ein virtueller Scan durch das Entfernen von einem oder mehreren Einzelbildern des realen Scans erzeugt wird.

16. Verfahren nach einem der Ansprüche 14 bis 15,
wobei ein virtueller Scan durch das Verfälschen von Farbdaten von einem oder mehreren Einzelbildern des realen Scans erzeugt wird, vorzugsweise können auch Rauhheit und/oder Metalness und/oder Wärmebilder verfälscht werden.

17. Verfahren nach einem der Ansprüche 14 bis 16,
wobei ein virtueller Scan durch das Entfernen von Teilen eines oder mehrerer der Einzelbilder des realen Scans erzeugt wird.

18. Verfahren nach einem der Ansprüche 14 bis 17,
wobei durch das Anwenden eines Verschiebungsrauschmusters auf ein Modell weitere Modelle erzeugt werden.
